# EUROPÄISCHE PATENTSCHRIFT

(11) **EP 1 534 784 B1**
(45) Veröffentlichungstag und Bekanntmachung des Hinweises auf die Patenterteilung: **22.01.2014**
(21) Anmeldenummer: 03747893.0
(22) Anmeldetag: 13.08.2003
(51) Int. Cl.: C08L 77/00, C08L 23/08, C08K 11/00

(54) **ELASTOMERENMODIFIZIERTE POLYAMIDE ZUR VERBESSERUNG DER KNICKBRUCHFESTIGKEIT VON FOLIEN UND HOHLKÖRPERN**
ELASTOMER MODIFIED POLYAMIDES FOR IMPROVING THE BREAKING RESISTANCE OF FILMS AND HOLLOW ELEMENTS
POLYAMIDES MODIFIES PAR DES ELASTOMERES, DESTINES A AMELIORER LA RESISTANCE AU FLAMBAGE DE FILMS ET DE CORPS CREUX

(30) Priorität: 19.08.2002 DE 10237820; 01.07.2003 DE 10329451
(43) Veröffentlichungstag der Anmeldung: 01.06.2005
(73) Patentinhaber: LANXESS Deutschland GmbH, 50569 Köln (DE)
(72) Erfinder: ULRICH, Ralf, D-40878 Ratingen (DE); MAHLKE, Matthias, D-41539 Dormagen (DE); SCHÄFER, Marcus, 47802 Krefeld (DE); SCHULTE, Helmut, 47803 Krefeld (DE); SCHWARZ, Peter, 47800 Krefeld (DE); HOCH, Martin, 52525 Heinsberg (DE); PARG, Roland, 51373 Leverkusen (DE)
(86) Internationale Anmeldenummer: PCT/EP2003/008978
(87) Internationale Veröffentlichungsnummer: WO 2004/026963

(56) Entgegenhaltungen:
- EP-A1- 1 347 011
- WO-A-00/23506
- US-A- 4 348 502
- US-A- 4 613 644
- PATENT ABSTRACTS OF JAPAN Bd. 0175, Nr. 16 (C-1112), 17. September 1993 (1993-09-17) & JP 5 140386 A (TORAY IND INC), 8. Juni 1993 (1993-06-08)
- BHATTACHARYYA ET AL.: "Mechanical properties and Morphology of PA6/EVA blends", JOURNAL OF POLYMER SCIENCE, vol. 85, 2002, pages 1593-1606,

## Beschreibung

Die vorliegende Erfindung betrifft flexible Zusammensetzungen enthaltend Polyamid und Ofefm-Vinylacetat-Copolymerisate, sowie Folien oder Hohlkörper enthaltend zumindest eine Schicht aus dieser Zusammensetzung und Verfahren zur Herstellung der Zusammensetzung bzw. Folien und Hohlkörper.

Polyamide zeichnen sich durch eine Vielzahl vorteilhafter Eigenschaften wie z.B. hohe Zähigkeit, hohe Temperaturfestigkeit u.a. aus, die ihnen im Bereich der technischen Thermoplaste einen festen Platz im Markt sicheren. Diese Basiseigenschaften des Polymeren werden im Allgemeinen durch die Zugabe von Zusatzstoffen oder Additiven modifiziert. Polymeres und Additive zusammen ergeben die sogenannte Formmasse. Polyamidformmassen kommen in vielen Anwendungen zum Einsatz. Beispielhaft genannt seien Spritzgussteile z.B. für den Automobilmarkt oder Extrudate wie Folien oder Hohlkörper für den Verpackungsbereich,

Aus der Literatur (*z.B.* H.-G. Elias, "An introduction to polymer science ", VCH Verlagsgesellschaft mbH,, Weinheim, 1997) ist bekannt, dass die Morphologie und mechanische Eigenschaften von Thermoplaste durch Zugabe von Elastomeren beeinflusst wird. Beispielsweise wird die Schlagzähigkeit insbesondere die Trockenschlagzähigkeit und die Bruchdehnung erhöht, während das E-Modul und die Kugeldruckhärte erniedrigt werden.

Die Kombination von Polyamiden mit Elastomeren z.B. zur Verbesserung der oben angeführten Eigenschaften ist in Patenten beschrieben. Vielfach werden elastische Polymere, wie beispielsweise Polyolefine, aber auch Elastomere auf der Basis von Kautschuken wie Polybutadien/Acrylnitril oder modifizierte Pfropfpolymerisate zugemischt. Beispielsweise ist die Kombination von Polyamiden und elastomeren Polypropylenen aus EP-B 0 640 650 B1 und DE-C 4131908 bekannt. EP-A 34 704 offenbart Mischungen aus Polyamid 66, Polyamid 6 und EPDM. Der Einsatz von Schlagzähthodifikatoten ist beispielsweise auch in EP-B 0 583 706 und US-A 4 410 661 beschrieben. Häufiger Nachteil solcher Blends ist eine mangelnde Wärmeformbeständigkeit.

Teilweise sind auch Anwendungen von elastomeimodifizierten Polymeren im Bereich der Folien und Hohlkörper beschrieben. DE-A 19 621 688 beschreibt die Herstellung transparenter, nicht blockender Folien auf Polystyrolbasis, die durch Zugabe von Styrol-Butadien-Blockcopolymeren und Ethylen-Vinylacetat-Copolymeren mit 8 % Vinylacetatgehalt, sowie drei weiteren Additiven modifiziert werden. DE-A 19 535 400 offenbart thermoplastische Formmassen auf Basis von Polystyrol, die durch Zugabe von Polyamid, Ethylen-Butylen-Styrol-Blockcopolymeren und vier weiteren Komponenten modifiziert werden. Nachteilig an den Patenten ist die hohe Anzahlt an Komponenten, die zur gewünschten Modifizierung benötigt werden. Weiterhin enthalten die Formmassen Elastomere mit ungesättigten Einheiten, die z.B. durch enzymatischen Abbau oder ozonolytisch zur Spaltung des Elastomeren führen können.

EP-A 0 382 048 offenbart thermoplastische Formmassen aus teilkristallinem Polyamid 66 oder teilkristallinen teilaromatischen Copolyamiden, die u.a. auch einen Kautschuk bestehend aus Monomeren der Gruppe der α-Olefine, primären oder sekundären Alkylester der Acrylsäure oder Methacrylsäure, ethylenisch ungesättigten Mono- oder Dicarbonsäuren oder epoxydhaltigen Monomeren, oder aus einem Kautschuk ohne säurefunktionellen Gruppen enthalten. Die beschriebene Zusammensetzung der thermoplastischen Formmasse ermöglicht jedoch vorrangig Anwendungen im Bereich der großflächigen Formteile wie Radblenden oder Kraftfahrzeugaußenteile. Nachteilig für Anwendungen im Folienbereich sind die hohe Steifigkeit und Festigkeit. Ähnliches gilt auch für EP 0 532 963.

Die Patentanmeldungen WO-A 00/23507, WO-A 00/23508 und VVO-A 00/23515 beschreiben die Erhöhung der Knickbruchfestigkeit von Folien, die nanoskalige Füllstoffe enthalten. Teilaromatische Copolyamide mit Partikeln einer Ausdehnung von weniger als 100 nm werden aus dem vollständig aufgeschmolzenen Zustand mit einer Rate zwischen 10°C und 20°C pro Minute abgekühlt, wobei von der Oberfläche der Partikel ausgehend kristalline Strukturen entstehen. Die Barriereeigenschaften solcher Materialien sind erhöht. Die Erhöhung der Knickbruchfestigkeit wird durch eine Modifizierung der Verfahrensparameter erreicht. Es ist jedoch als ein wesentlicher Nachteil anzusehen, dass bei dem Verfahren die oben definierten Parameter einehalten werden müssen.

Im Patent JP-A 2000168010 werden Polyamidverbunde offenbart, die Copolymere aus aliphatischen Polyamiden, Polyoxyalkylenglykol und zusätzlich Polybutadien zur Verbesserung der Durchstoßfestigkeit enthalten. Nachteilig ist, dass verschiedene Additive verwendet werden müssen, was die Transparenz negativ beeinflussen kann. WO 93/00404 A1 beschreibt die Herstellung von flexiblen Filmen auf Polyamidbasis durch Zugabe von 5 - 50 % eines durch funktionale Gruppen modifizierten Polyolefins. Von Nachteil ist der hohe Gehalt an Olefin anzusehen, der zur erhöhten Trübung fuhren kann.

In DE-C 3941529, JP-A 51028138 und JP-A 60161453 werden Polyamidzusammensetzungen offenbart, die jeweils ein verseiftes Ethylen-Vinylacetat-Copolymer (Verseifungsgrade > 90 %) enthalten. Die Verseifung von Ethylen-Vinylacetat stellt einen zusätzlichen Verfahrensschritt dar, außerdem ist die Verträglichkeit zwischen dem hydrolysierten Copolymer und dem Harz nicht notwendigerweise zufriedenstellend.

In EP-A 0225164 wird beschrieben, dass die Knickbruchfestigkeit von Mehrschichtfolien verbessert werden kann, indem die Polyamidschicht zwischen Schichten z.B, aus Copolymeren aus Ethylen und Carboxylsäuren eingebettet wird. Nachteilig bei dieser Methode ist, dass zur Erhöhung der Knickbruchfestigkeit 3 Schichten benötigt werden.

JP-A 05140386. offenbart Mischungen eines Endgruppen-blockierten Polyamids als Thermoplast-Komponente und eines teilweise verseiften Ethylen-Vinylacetat Copolymers als Elastomer-Komponente, die im Dokument durchgängig auch als EVOH abgeküzt werden.

JP-A 195961 offenbart Mischungen von Polycaprolacton, d.h. einem Polyester, und einem Ethylen-Vinylacetat Copolymer.

Folien und Hohlkörper, die eine Polyamidschicht enthalten, zeichnen sich durch eine Vielzahl vorteilhafter Eigenschaften aus. Zu nennen sind insbesondere gute optische Eigenschaften wie hohe Transparenz von Folien bzw.. Holilkörper mit hohem Oberflächenglanz. Außerdem von Bedeutung sind die guten mechanischen Eigenschaften wie hohe Zähigkeit, hohe Durchstoßfestigkeit, hohe Weitereißfestigkeit und andere. Hinzu kommt eine einfache Herstellbarkeit und einfache Weiterverarbeitbarkeit.

Von besonderer Bedeutung für viele Einsatzgebiete für Folien und Hohlkörper, insbesondere für den Einsatz im Verpackungsscktor z.B. für Lebensmittel oder Kosmetika ist eine niedrige Durchlässigkeit für Sauerstoff, Wasserdampf Kohlendioxid, Fette, Aromastoffe und andere wesentliche Komponenten des verpackten Gutes bzw. für Stoffe, die vom verpackten Gut ferngehalten werden sollen, sowie eine hohe Flexibilität der Folie.

Die erfindungsgemäße Aufgabe bestand in der Erhöhung der Knickbruchfestigkeit von Folien bzw. Hohlkörpern enthaltend mindestens eine Schicht aus Formmassen auf Polyamidbasis, wobei die gängigen Herstellungsverfahren weiterhin verwendet werden können.

Überraschenderweise konnte nun gezeigt werden, dass durch Modifizierung von Polyamiden mit Elastomeren, nämlich Copolymerisaten aus Olefinen und Vinylacetat, und mit mindestens einem nanoskaligen Füllstoff die Aufgabe gelöst wird und z.B. die oben geforderten Eigenschaften bezüglich hoher Flexibilität der Folie erzielt werden können. In einer bevorzugten Variante der Erfindung wird als Elastomer Ethylen-Vinylacetat--Polymer verwendet. In einer besonders bevorzugten Variante der Erfindung werden als Elastomer Ethylen-Vinylacetat-Polymer mit hohen Gehalten an Vinylacetat verwendet. Die Modifizierung des Polyamidharzes kann mit einem Masterbatch oder durch Granulatmischung der Einzelkomponenten erfolgten.

Gegenstand der Erfindung sind Zusammensetzungen enthaltend als Komponente A)
99,9-50 Gewichtsprozent Polyamid und als Elastomer ausschließlich eine Komponente B) in Form von
0,1-50 Gewichtsprozent eines oder mehrerer Olefin-Vinylacetat-Copolymerisate und mindestens einen nanoskaligen Füllstoff.

Gegenstand der Erfindung ist ebenfalls die Verwendung dieser Polyamid-Zusammensetzungen zur Herstellung von Folien oder Hohlkörpern.

Gegenstand dieser Erfindung sind auch Verfahren zur Herstellung der erfinduilgsgemäßen Zusammensetzungen durch Schmelzeompoundierung der Komponenten sowie der entsprechenden Folien und Hohlkörper enthaltend zumindest eine Schicht der erfindungsgemäßen Zusammensetzung.

Gegenstand der Erfindung sind weiterhin bevorzugt ein- oder mehrschichtige Folien oder Hohlkörper enthaltend mindestens eine Schicht der erfindungsgemäßen Zusammensetzungen.

Gegenstand der Erfindung sind weiterhin bevorzugt mono- oder biaxial gestreckte ein- oder mehrschichtige Folien oder Hohlkörper enthaltend mindestens eine Schicht der erfindungsgemäßen Zusammensetzungen.

Gegenstand der Erfindung sind außerdem Verpackungen aus einer erfindungsgemäßen Folie oder einem erfindungsgemäßen Hohlkörper.

Bevorzugt, besonders bevorzugt oder ganz besonders bevorzugt sind Ausfuhrungsfutmen, welche von den unter bevorzugt, besonders bevorzugt oder ganz besonders bevorzugt genannten Parametern, Verbindungen, Definitionen und Erläuterungen Gebrauch machen.

Die oben aufgeführten allgemeinen oder in Vorzugsbereichen aufgeführten Definitionen, Parameter, Verbindungen und Erläuterungen können jedoch auch untereinander, also zwischen den jeweiligen Bereichen und Vorzugsbereichen beliebig kombiniert werden.

Bei dem Polyamid, das in der erfindungsgemäßen Zusammensetzungen, Folien oder Hohlkörper enthalten, ist, handelt es sich um ein bekanntes aliphatisches oder aromatisches oder teilaromatishes Homopolyimid oder Copolyamid oder um eine Mischung aus mehreren Polyamiden. Bevorzugt eingesetzt werden beispielsweise und unabhängig voneinander Polyamid 6, Polyamid 66, Polyamid 10, Polyamid 11, Polyamid 12, Polyamid 46, Polyamid 610, Polyamid 6I, Polyamid 612, Polyamid 6/66, Polyamid 6I/6T, Polyamid MXD6, Polyamid 6/6I, Polyamid 6/6T, Polyamid 6/IPDI und Copolymeren sowie Polymertnischungen dieser Gruppen.

Besonders bevorzugt eingesetzt wird Polyamid 6 oder Polyamid 66 oder ein Copolyamid aus Caprolactameinheiten und Einheiten abgeleitet von Hexamethylendiamin und Isophthalsäure oder Hexamethylendiamin und Terephthalsäure oder Hexamethylendiamin und Adipinsäure.

Die erfindungsgemäße Modifizierung von Polyamiden erfolgt durch Elastomere in Form von Olefin-Vinylacetat-Copolymerisaten. Die Olefin-Vinylacetat-Copolymerisate haben ein durchschnittliches Molekulargewicht (Zahlenmittel, bestimmt mittels GPC) im Bereich von 30 kg/mol bis 500 kg/mol und MFI-Werte von 0,5 bis 100. Diese Copolymerisate haben vorteilhaftetweise einen "Vinylacetatgehalt von 30 bis 99 Gewichtsprozent, bevorzugt 40-95 Gewichtsprozent und äußerst bevorzugt 80-90 Gewichtsprozent.

Die Auswahl erfindungsgemäß einzusetzender Olefin-Vinylacetat-Copolymerisate in Bezug auf den MFI-Wert bzw. Molgewicht richtet sich nach den Gegebenheiten der Verarbeitung des Polyamides. Die Einmischung in das erfindungsgemäße Polyamid kann in einem Extruder erfolgen, der über ausreichende Mischzoften verfügt. Es kann ein Masterbatch oder eine Granulatmischung der Einzelkomponenten der erfindungsgemaßen Komponenten in einem Extruder gemischt und direkt zu erfindungsgemäßen Zusammensetzungen verarbeitet werden oder es wird zunächst ein Konzentrat in einem Mischorgan hergestellt. Die Bedingungen der Herstellung der erfindugsgemäßen Zusammensetzungen richten sich hauptsächlich nach dem Schmelzverhalten des Polyamides und dessen Viskosität und sind für den Fachmann dementsprechend leicht zu ermitteln. So liegen die Massetemperaturen z.B. zwischen 250°C und 330°C, bevorzugt zwischen 265°0 und 300°C_{;} die Verweilzeit kann zwischen 0,5 und 5 Minuten, bevorzugt zwischen 0,5 und 2 Minuten liegen

Bevorzugte Olefin-Vinylacetat-Copolymerisate sind zum Beispiel Levamelf 400, Levamelt 450, Levamelt 500, Levamelt 600 HV, Levamelt 700, Levamelt 800 und Levapren 8939, welche von der Bayer AG erhältlich sind. Diese Polymerisate enthalten jeweils 40 ± 1,5 Gewichtsprozent Vinylacetat, bzw. 50 ± 1,5 Gewichtsprozent Vinylacetat, bzw. 60 ± 1,5 Gewichtsprozent Vinylacetat, bzvv. 70 ± 1,5 Gewichtsprozent Vinylacetat,, bzw. 80 ± 2,0 Gewichtsprozent Vinylacetat bzw. 92 ± 2,0 Gewichtsprozent Vinylacetat.

Diese Olefin-Vinylacetat-Copolymerisate können auch in Form einer Mischung aus zwei oder mehr unterschiedlichen der genannten Olefin-Vinylacetat-Copolymerisate eingesetzt werden.

Die Herstellung der Olefin-Vinylacetat-Copolymerisate erfolgt mit den in der Technik üblichen Copolymerisationsverfahren, beispielsweise durch Hochdruckcopolymerisation mit Hilfe radikalisch zerfallender Initiatoren, Die Copolymerisation kann dabei in der Gasphase, in Lösung oder in einer Suspension sowohl kontinuierlich als auch diskontinuierlich durchgeführt werden. Bevorzugt ist jedoch die Lösungspolymerisation, weil diese in besonderer Weise geeignet ist, gelfreie Produkts für die Folienextrusion zu erzeugen.

Derartige Herstellungsverfahren sind dem in der Kautschuktechnik arbeitenden Fachmann bekannt und beispielsweise in *V.E. Rohde, 141. Meeting at the ACS Louisville 1992,* aber auch in EP-A 0 341 499, DE-A 3 825 450 und EP-A 0 510 478 beschrieben.

Die Olefin-Vinylacetat-Copolymerisate werden bevorzugt in reiner Form, können jedoch auch in Abmisehungen mit anderen polaren Olefin-Copolymeren beispielsweise Olefin-Vinylalkohol-Copolymerisate, Olefin-Maleinsäureanhydrid-Copolymerisate, Olefin-Acrylsäureester-copolymerisate eingesetzt werden. Diese Zusätze können 0,1 bis 50 Gewichtsprozent der erfindungsgemäßen Zusammensetzungen ausmachen. Die Elastomere machen bevorzugt 0,1 bis 10 Gewichtsprozent, besonders bevorzugt 0,1 bis 5 Gewichtsprozent, der erfindungsgemäßen Zusammensetzungen aus.

Die erfindungsgemäßen Folien oder Hohlkörper können aus nur einer Schicht basierend auf der erfindungs gemäßen Zusammensetzung bestehen oder einen mehrschichtigen Ausbau aulweisen, Im Falle des mehrschichtigen Aufbaus können die weiteren Schichten z.B. aus Polyolefinen wie z.B. Polyethylen oder Polyethylencopolymeren wie z.B. Copolymeren aus Ethylen und Acrylsäure oder Methacrylsäure oder Barrierepolymeren wie z.B. Polyvinylidenchlorid oder Copolymeren aus Ethylen und Vinylalkohol bestehen.

Weiterhin können die Zusammensetzungen bevorzugt nanohaltige Füllstoffe enthalten.

Der Einsatz von nanoskaligen Systemen zur Erhöhung der Barriereeigenschaften ist in der Literatur beschrieben. EP-A 0 358 415 beschreibt Folien aus Polyamiden, die Schichtsilikate enthalten und dadurch eine gesteigerte Sauerstoffbarriere aufweisen. Die Gleiteigenschaften und die Transparenz von einschichtigen amorph abgeschreckten Folien bleibt gegenüber reinem Polyamid 6 unverändert. Nachteilig an diesen Folien ist die Zunahme der Steifigkeit und damit verbunden die Abnahme der Knickbruchfestigkeit.

In den Patentanmeldungen WO-A 93/04117, WO- 93/04118 und WO-A 93/11190 sind Polymere enthaltend Nanokomposite mit plättchenförmigen Partikeln im Dickenbereich von wenigen Nanometern beschrieben. Insbesondere werden Komposite aus Polyamid 6 und Montmorillonit bzw. Polyamid 6 und Silikaten erwährt. Vorteilhaft ist in diesem Fall eine parallele Ausrichtung der Partikel zur Folienoberfläche. Es werden Anwendungen als Monofolie und Mehrschichtfolie beschrieben, wobei die gefertigten Folien optional gereckt werden können, um eine verbesserte Orientierung der Nanopartikel zu erreichen. Vorteile solcher Folien sind wiederum die erhöhten Baniereeigenschaften, eine erhöhte Festigkeit im feuchten Zustand und eine geringere Wasseraufnahme. Die wesentlichen Nachteile solcher Folien bestehen in der hohen Steifigkeit und die dadurch verursachte geringe Knickbruch- und Durchstoßfestigkeit.

EP-A 0 810 259 beschreibt Polyamidformassen, die nanoskalige Füllstoffe aus der Gruppe der Oxide und Oxidhydrate von Metallen und Halbmetallen enthalten, sowie Folien und Hohlkörper die mindestens eine entsprechende Polyamidschicht aufweisen. Die Sauerstoffpermeation solcher Folien ist bei nahezu unveränderter Trübung erniedrigt. Nachteilig ist wiederum die hohe Steifigkeit und die geringere Knickbruchfestigkeit, sowie der geringere Glanz.

Nanoskalige Füllstoffe sind Partikel, deren Längenabmessung in eine wählbare Richtung weniger als 1 Mikrometer beträgt. Die Bestimmung der mittleren Partikelgröße erfolgt z.B. durch visuelle Beurteilung transmissionselektronenmikroskopischer Aufnahmen von Ultradünnschnitten der entsprechenden Formmassen. Falls die Partikel stark anisotrop sind, ist unter der Partikelgröße die Abmessung der kleinsten auftretenden Achse zu verstehen. So ist im Falle von plättchenförmigen Partikeln unter der Partikelgröße die Plättchendicke zu verstehen. Eine Übersicht über nanoskalige Füllstoffe ist z.B. in Nanocomposites - auf dem Weg zur Anwendung, KU Kunstsfoffe, 10, 91, 2001, 178 - 190 gegeben.

Die erfindungsgemäß eingesetzten nanoskaligen Füllstoffe können aus der Gruppe der Oxide, Oxidhydrate von Metallen oder Halbmetallen ausgewählt sein. Bevorzugt werden erfindungsgemäß Oxide oder Oxydhydrate eines Elementes aus der Gruppe Bor, Aluminium, Gallium, Indium, Silizium, Zinn, Titan, Zirkonium Zink, Yttritum oder Eisen eingesetzt.

Weiterhin können auch dendritische oder hochverzweigte Verbindungen eingesetzt werden. Diese können z.B. aus der Gruppe der Polyethylenimine, Polypropylenimine, Polyesteramide, Polyester oder Polyether ausgesucht sein.

Bevorzugt eingesetzt werden nanoskalige Füllstoffe aus der Gruppe der Schichtsilikate. Diese können aus der Gruppe der Phyllosilikate wie Magnesiumsilikat oder Aluminiumsilikat, sowie Montmorillonit, Saponit, Beidellit, Nontronit, Hectorit, Stevensit, Vermiculit, Halloysit oder deren synthetische Analoga stammen und organisch modifiziert sein können.

Die nanoskaligen Füllstoffe können bereits zum Beginn der Polymerisation dem Reaktionsansatz zugegeben werden. Es ist aber auch möglich, das bereits existierende Polymer in einem zweiten Verfahrensschritt mit nanoskaligen Füllstoffen zu modifizieren. Es können 0,1 bis 10 Gewichtsprozent, bevorzugt 0,1 - 5,0 Gew. %, an nanoskaligen Füllstoffe in das Polymer eingearbeitet werden.

Die Zugabe der Füllstoffe kann vor, während oder nach der Polymerisation erfolgen. Auch eine getrennte Zugabe der verschiedenen Füllstoffe ist möglich. Die Zugabe der nanoskaligen Partikel erfolgt bevorzugt während der Polymerisation. Die Zugabe der erfindungsgemäßen Elastomeren erfolgt vorzugsweise als Dry Blend oder als Masterbatch.

Die Füllstoffe können bei der Zugabe schon als Partikel mit der letztendlich in der Zusammensetzung auftretenden Partikelgröße vorlieben. Alternativ können die Füllstoffe in Form von Vorstufen zugegeben werden, aus denen die letztendlich in der Zusammensetzung auftretenden Partikel erst im Laufe der Zugabe bzw. Einarbeitung entstehen.

Die erfindungsgemäßen Folien oder Hohlkörper werden in bekannter Weise z.B. durch Extrusion, Coextrusion, Beschichten, Kaschieren oder Blasformen hergestellt. Im Falle der Folien kann die Extrusion oder Coextrusion z.B. nach dem sogenannten Chill-roll-Verfahren oder nach dem Blasextrusionsverfahren bzw. Blascoextrusionsverfahren erfolgen. Bei mehrschichtigen Folien oder Hohlkörpern können die handelsüblichen Haftervermittler eingesetzt werden.

Die Ausgangspolyamide für die erfindungsgemäßen Zusammensetzungen können in einem kontinuierlichen oder in einem diskontinuierlichen Verfähren in bekannter Weise hergestellt werden. Bei einem diskontinuierlichen Verfahren kann es sich z.B. um die Polymerisation in einem Autoklaven handeln. Bei einem kontinuierlichen Verfahren kann es sich z.B. um die Polymerisation in einem sogenannten VK-Rohr handeln. Bevorzugt erfolgt die Herstellung nach einem kontinuierlichen Verfahren. Zur Erreichung hoher Molmassen, wie sie für die Anwendung als Folienmaterial häufig erforderlich sind, kann der Polymerisation in Schmelze eine Nachkondensation in fester Phase nachgeschaltet sein. Die Zugabe der erfindungsgemäßen Elastomeren erfolgt vorzugsweise als Dry Blend oder als Masterbatch.

Die erfindungsgemäßen Folien oder Hohlkörper können vor ihrem letztendlichen Einsatzzweck weiter bearbeitet oder umgeformt werden. So können die erfindungsgemäßen Folien z.B. tiefgezogen werden. Die erfindungsgemäßen Folien oder Hohlkörper können z.B. zu Verpackungszwecken eingesetzt werden. Erfindungsgemäße Folien oder Hohlkörper können z.B. zur Verpackung von Lebensmitteln, wie Fleisch und Fleischprodukten, Wurst, Käse, Getränke u.a. verwendet werden. Die erfindungsgemäßen Folien oder Hohlkörper können z.B. auch zur Verpackung von Kosmetika wie z.B. Sonnenschutzcremes oder Chemikalien wie z.B. Pflanzenschutzmittel verwendet werden. Des weiteren können die erfindungsgemäßen Hohlkörper als Leitungen oder Tanks dienen. Dabei kann es sich z.B. um Leitungen oder Tanks für Kraftstoffe oder Öle für Automobile handeln.

Die hier gefundene deutliche Verbesserung der Knickbruehfestigkeit durch die erfindungsgemäße Zumischung des Elastomers war besonders überraschend, weil nach dem Stand der Technik bisher nur säuregepfropfte Ethylen-Propylen-Copolymere als Polyamidmodifikatoren empfohlen wurden. Überraschenderweise tritt die Wirkung bereits bei Zumischungen von 1 Gewichtsprozent auf, Wobei die einwandfreie Extrudierbarkeit zu sehr dünnen Folien überraschenderweise gewährleistet bleibt.

### Prüfmethoden:

Die Ermittlung der Knickbruchfestigkeit erfolgt nach dem Gelboflextest (MIL-B-131D). Temperatur und relative Feuchte entsprechen dem Raumklima. Der Probenzuschnitt beträgt 1 = 29,6 cm, b = 22,0 cm, d ca. 60 µm. Die Drehung des Zylinder erfolgt um 360 Grad, bei einer Hublänge von 10,5 cm und einer Hubfrequenz von 35/min.

Der MFI wurde gemessen nach DIN 53735 unter den Bedingungen 190°C und 2,16 kg.

GPC wurde unter Standardbedingungen auf einer Shodex RI-71 Säule und mit THF als Lösemittel bei 45 °C durchgeführt. 100 µl einer 0,05 % Lösung des Polymeren wurde injiziert. Für die Kalibrierung wurden Polystyrol-Standarts verwendet. Die Ergebnisse wurden durch kommerziell erhältliche Polyvinylacetat-Standarts validiert.

## Patentansprüche

1. Zusammensetzung enthaltend
als Komponente A)
99,9 bis 50 Gewichtsprozent Polyamid und
als Elastomer ausschließlich eine Komponente B) in Form von 0,1 bis 50 Gewichtsprozent eines oder mehrerer Olefin-Vinylacetat-Copolymerisate und mindestens einen nanoskaligen Füllstoff.

2. Zusammensetzung gemäß Anspruch 1, wobei
B) Polyalkylenvinylacetat darstellt.

3. Zusammensetzung gemäß einem oder mehrere der vorangegangenen Anspruche, wobei B) Ethylen-Vinylacetat-Polymer darstellt.

4. Zusammensetzung gemäß einem oder mehrere der vorangegangen Ansprüche, wobei das Olefin-Vinylacetat Copolymer B) einen Vinylacetatgehalt von 30-99 Gewichtsprozent besitzt.

5. Zusammensetzung gemäß Anspruch 4, wobei der Vinylacetatanteil 40-95 Gewichtsprozent beträgt.

6. Zusammensetzung gemäß Anspruch 4, wobei der Vinylacetatanteil 80-90 Gewichtsprozent beträgt.

7. Zusammensetzung gemäß Anspruch 4, wobei der nanoskalige Füllstoff ein Schichtsilikat darstellt.

8. Zusammensetzung gemäß Anspruch 7, wobei der nanoskalige Füllstoff aus der Gruppe der Oxide und Oxidhydrate von Metallen oder Halbmetallen ausgewählt ist.

9. Zusammensetzung gemäß Anspruch 7 bis 8, wobei der nanoskalige Füllstoff im Bereich von 0,1 bis 5 Gewichtsprozent bezogen auf das Polyamid eingesetzt wird.

10. Verfahren zur Herstellung einer Zusammensetzung gemäß einem oder mehrerer der Ansprüche 1 bis 10 durch Schmelzcompoundierung der Komponente A) und der Elastomer-Komponente B) sowie gegebenenfalls ein oder mehreren nanoskaligen Füllstoffen, wobei nanoskalige Füllstoffe und Elastomer-Komponente B) sowohl gemeinsam, wie auch getrennt voneinander zudosiert werden können.

11. Verfahren gemäß Anspruch 10, wobei die Elastomer-Komponente B) als Masterbatch oder als Granulatmischung eingearbeitet wird.

12. Verwendung von Zusammensetzungen gemäß Anspruch 1 zur Herstellung von Formkörpern, ein- oder mehrschichtigen Folien oder Hohlkörpern.

13. Formkörper, ein- oder mehrschichtige Folien oder Hohlkörper hergestellt aus Zusammensetzungen gemäß Anspruch 1.

14. Verwendung von Hohlkörpern gemäß Anspruch 13 als Leitung und/oder Tanks.

## Claims

1. Composition comprising
as component A)
from 99.9 to 50% by weight of polyamide and as elastomer exclusively a component B) in the form of
from 0.1 to 50% by weight of one or more olefinvinyl acetate copolymers and comprising at least one nanoscale filler.

2. Composition according to Claim 1, where B) is polyalkylene-vinyl acetate.

3. Composition according to one or more of the preceding claims, where B) is ethylene-vinyl acetate polymer.

4. Composition according to one or more of the preceding claims, where the vinyl acetate content of the olefin-vinyl acetate copolymer B) is from 30 to 99% by weight.

5. Composition according to Claim 4, where the proportion of vinyl acetate is from 40 to 95% by weight.

6. Composition according to Claim 4, where the proportion of vinyl acetate is from 80 to 90% by weight.

7. Composition according to Claim 4, where the nanoscale filler is a phyllosilicate.

8. Composition according to Claim 7, where the nanoscale filler has been selected from the group of the oxides and oxide hydrates of metals or of semimetals.

9. Composition according to Claim 7 or 8, where the nanoscale filler is used in the range from 0.1 to 5% by weight, based on the polyamide.

10. Process for preparation of a composition according to one or more of Claims 1 to 9 via melt compounding of component A) and of elastomer component B), and also optionally of one or more nanoscale fillers, where nanoscale fillers and elastomer component B) may be metered in either together or else separately from each other.

11. Process according to Claim 10, where the elastomer component B) is incorporated in the form of a masterbatch or in the form of a pellet mixture.

12. Use of compositions according to Claim 1 for production of moldings, of single- or multilayer films or of hollow articles.

13. Moldings, single- or multilayer films, or hollow articles produced from compositions according to Claim 1.

14. Use of hollow articles according to Claim 13 as line and/or tanks.

## Revendications

1. Composition contenant
comme composant A) 99,9 à 50% en poids de polyamide et comme élastomère exclusivement un composant B) sous forme de 0,1 à 50% en poids d'un ou de plusieurs copolymères d'oléfine-acétate de vinyle et au moins une charge nanométrique.

2. Composition selon la revendication 1, B) représentant un poly(alkylène-acétate de vinyle).

3. Composition selon l'une ou plusieurs des revendications précédentes, B) représentant un polymère d'éthylène-acétate de vinyle.

4. Composition selon l'une ou plusieurs des revendications précédentes, le copolymère d'oléfine-acétate de vinyle B) présentant une teneur en acétate de vinyle de 30-99% en poids.

5. Composition selon la revendication 4, la proportion d'acétate de vinyle étant de 40-95% en poids.

6. Composition selon la revendication 4, la proportion d'acétate de vinyle étant de 80-90% en poids.

7. Composition selon la revendication 4, la charge nanométrique étant un silicate à couches.

8. Composition selon la revendication 7, la charge nanométrique étant choisie dans le groupe des oxydes et des oxydes hydratés de métaux ou de semi-métaux.

9. Composition selon la revendication 7 à 8, la charge nanométrique étant utilisée dans la plage de 0,1 à 5% en poids par rapport au polyamide.

10. Procédé pour la préparation d'une composition selon l'une ou plusieurs des revendications 1 à 9 par compoundage en masse fondue du composant A) et du composant élastomère B) ainsi que le cas échéant d'une ou de plusieurs charges nanométriques, les charges nanométriques et le composant élastomère B) pouvant être dosés ensemble ainsi que séparément l'un de l'autre.

11. Procédé selon la revendication 10, le composant élastomère B) étant incorporé sous forme de lot-maître ou de mélange de granulats.

12. Utilisation de compositions selon la revendication 1 pour la fabrication de corps moulés, de feuilles à une ou plusieurs couches ou de corps creux.

13. Corps moulés, feuilles à une ou plusieurs couches ou corps creux fabriqués à partir de compositions selon la revendication 1.

14. Utilisation de corps creux selon la revendication 13 comme conduite et/ou réservoirs.
